# EUROPEAN PATENT SPECIFICATION

(11) **EP 2 822 796 B1**
(45) Date of publication and mention of the grant of the patent: **08.11.2023**
(21) Application number: 12870919.3
(22) Date of filing: 05.03.2012
(51) Int. Cl.: B60K 26/00, B60K 26/02, A61G 5/04, A61G 5/10, A61G 5/12

(54) **ADJUSTABLE AND RECONFIGURABLE HEAD ARRAY SYSTEM FOR A POWER WHEELCHAIR**
VERSTELLBARES UND REKONFIGURIERBARES KOPFARRAYSYSTEM FÜR EINEN ANGETRIEBENEN ROLLSTUHL
SYSTÈME DE TÊTIÈRE AJUSTABLE ET RECONFIGURABLE POUR FAUTEUIL ROULANT À MOTEUR

(43) Date of publication of application: 14.01.2015
(73) Proprietor: Permobil AB, 861 23 Timrå (SE)
(72) Inventor: JOSTEN, Johannes Engelmundus Leonardus Mathias, 5616 AW Eindhoven (NL); SEDLAK, Jeremy Michael, Nashville, Tennessee 37214-2643 (US); POGIR, Hymie, Austin, Texas 78738 (US); FRAEYMAN, Hans Leon, 9900 Eeklo (BE)
(74) Representative: Schollweck, Susanne
(86) International application number: PCT/US2012/027718
(87) International publication number: WO 2013/133788

(56) References cited:
- US-A- 3 675 646
- US-A- 4 266 825
- US-A- 4 732 423
- US-A- 5 586 810
- US-A- 5 868 471
- US-A- 6 095 611
- US-A1- 2003 205 420
- US-A1- 2005 183 900
- US-A1- 2005 183 900
- US-B1- 6 419 321
- US-B1- 6 419 321

## Description

### FIELD OF THE INVENTION

Certain embodiments of the invention relate to a reconfigurable and adjustable head array system for use with power wheelchairs.

### BACKGROUND OF THE INVENTION

Head array devices allow a user of a power wheelchair to control various functions (also referred to as modes) of the wheelchair and other connected components. For example, a head array may allow a user to activate switches or sensors using the user's head to drive the wheelchair, elevate, tilt and/or recline the wheelchair seat, and control the wheelchair leg rests. Further, a head array can allow a user to activate switches or sensors using the user's head to interact with a computer by moving a mouse, for example. As another example, a head array may allow a user to activate switches or sensors using the user's head to open doors and interact with patient rehabilitation equipment, among other things. Additionally, a head array can allow a user to perform an emergency stop of the power wheelchair, for example.

Existing head array devices typically include one to three main switches or sensors in a headrest. A first switch or sensor is typically integrated into a rear headrest of the head array, which is commonly referred to as an occipital pad. The occipital pad can be mounted to a head array base structure that is mounted to the power wheelchair. Optional second and third switches or sensors may be integrated into headrest wings that extend on one or both sides of a user's head. Alternatively, the optional second and third switches or sensors can be integrated into pads that are held in place on one or both sides of a user's head using head array lateral arms that attach to the head array base structure. In some current head array devices, an additional mode switch or sensor may also be held in place on one side of a user's head using an additional head array lateral arm that attaches to the head array base structure.

As an example, to drive a power wheelchair using a head array device having three primary sensors and the mode switch, the first sensor integrated into the rear of the headrest can allow the user to drive straight forward or straight backward depending on the selected mode. The second sensor on the left side of the user's head and a third sensor on the right side of the user's head may allow a user to turn left and right, respectively. The mode switch can allow a user to switch between driving forward and driving backward. Additionally, the mode switch may allow a user to switch to other modes, such as performing an emergency stop, adjusting the wheelchair seat or leg rests, controlling a computer mouse, opening doors, and interacting with patient rehabilitation equipment, for example.

Current head array devices suffer from several limitations. For example, in many current head array devices, the length of the lateral arms may not be adjustable. Instead, the lateral arms once positioned for a particular user are cut to a specific length. Other existing head array devices may include adjustable lateral arms where the unused sections of the lateral arms extend behind the headrest. In addition to having a bulky and disorganized appearance, the unused lateral arm section may present a hazard in that other objects in the user's environment may hook, snag or otherwise make contact with the unused lateral arm sections extending behind the headrest.

As another example, existing head array devices cannot change the configuration of the lateral sensor arms in relation to each other and to a mode switch arm. A clinician, technician or caregiver fitting the head array for the user cannot move a right lateral sensor arm to the left side. Further, if a mode switch is attached to the head array base structure below a right lateral arm, a clinician, technician or caregiver cannot remove the mode switch arm and right lateral sensor arm and reattach the mode switch arm above the right lateral arm. Instead, current head array devices are typically custom ordered and are not capable of alteration. As such, a new head array would need to be ordered if a different configuration was needed for or desired by a user. Additionally, because the lateral arms of existing head array devices are not easily removable, the existing head array devices are more difficult to clean.

Further, head array devices are exempt from various regulations such as, for example, electromagnetic compatibility (EMC), electromagnetic interference (EMI), and electrostatic discharge (ESD) standards because head arrays are considered an aftermarket accessory. Current head array devices do not meet the regulations set forth in EMC, EMI and ESD, among others. Although head array devices are exempt from complying with those and other standards, compliance with the standards results in safer head array devices.

Also, as discussed above, existing head array devices may include a single sensor in the occipital pad of the head array. However, perspiration, hair product or other moisture may soak the occipital pad, creating a conductive mass that causes unintentional activation of the sensor. Unintentional activation of the occipital pad sensor may be frustrating and hazardous for a user.

Additionally, existing head array devices are bulky and have disorganized cable management with multiple cable connections at different points on or around the power wheelchair. For example, cables can be untidily attached to an outer surface of the lateral arms. As another example, cables from different switches or sensors of existing head array devices may be routed to separate control boxes located at various locations on or around the power wheelchair.

As such, there is a need for providing uncomplicated position adjustability for head array lateral arms. Further, there is a need for a head array device that allows the addition of sensors, the removal of sensors, and the reconfiguration of the locations of existing sensors. Also, there is a need for a head array that complies with EMC, EMI and ESD regulations. Additionally, there is a need for a safeguard to prevent unintentional activation of the occipital pad sensor. Further, there is a need for cleanly managing head array cables and for providing a central connection location for the head array cables.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

An adjustable and reconfigurable power wheelchair head array system is provided, substantially as shown in and/or described in connection with at least one of the figures, as set forth more completely in the claims.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram that illustrates a perspective view of an exemplary head array system in accordance with an embodiment of the present invention.
FIG. 2 is a diagram that illustrates a front view of an exemplary head array system in accordance with an embodiment of the present invention.
FIG. 3 is a diagram that illustrates a side view of an exemplary head array system in accordance with an embodiment of the present invention.
FIG. 4 is a diagram that illustrates a rear view of an exemplary head array system in accordance with an embodiment of the present invention.
FIG. 5 is a diagram that illustrates a top view of an exemplary head array system in accordance with an embodiment of the present invention.
FIG. 6 is a diagram that illustrates a side view of an exemplary head array system in accordance with an embodiment of the present invention.
FIG. 7 is a diagram that illustrates a bottom view of an exemplary head array system in accordance with an embodiment of the present invention.

The foregoing summary, as well as the following detailed description of certain embodiments of the present invention, may be better understood when read in conjunction with the appended drawings. For the purpose of illustrating the invention, certain embodiments are shown in the drawings. It should be understood, however, that the present invention is not limited to the arrangements and instrumentality shown in the attached drawings.

### DETAILED DESCRIPTION

Certain embodiments of the invention may be found in an adjustable and reconfigurable power wheelchair head array system comprising a head array body 20 and one or more lateral arms 60, 70. The head array body 20 comprises shafts 21. Each of the shafts 21 comprises lateral arm receiving sections. The one or more lateral arms 60, 70 are detachably coupled to one of the lateral arm receiving sections of one of the shafts 21.

Certain embodiments provide a head array system 10 for a power wheelchair, comprising a head array body 20, one or more of a sensor 40, 50 and a switch 40, 50, and one or more lateral arms 60 operable to couple the one or more of the sensor 40, 50 and the switch 40, 50 to the head array body 20. The one or more lateral arms 60 comprise a hollow, curved lateral arm tube 60 attached to the head array body 20, a curved telescoping extension 61 attached to the one or more of the sensor 40, 50 and the switch 40, 50, and a first securing mechanism 62. The telescoping extension 61 is slidable from a selectable non-extended position, where the telescoping extension 61 is substantially housed within the lateral tube 60, to selectable extension positions at least partially outside of the lateral arm tube 60. The first securing mechanism 62 is operable to lock the telescoping extension 61 into one or more of the selectable non-extended positions and the selectable extension positions.

Certain embodiments provide a head array system 10 for a power wheelchair, comprising a head array body 20 and an occipital pad. The head array body 20 comprises a microprocessor configured to generate command signals in response to sensor activation signals. The occipital pad is attached to the head array body 20 and comprises a plurality of sensors 30. Each of the plurality of sensors 30 is configured to transmit an activation signal to the microprocessor in response to sensor activation. The microprocessor generates a command signal if the microprocessor receives the activation signal from all of the plurality of sensors 30 in the occipital pad, and disregards the activation signal if the microprocessor receives the activation signal from less than all of the plurality of sensors 30 in the occipital pad.

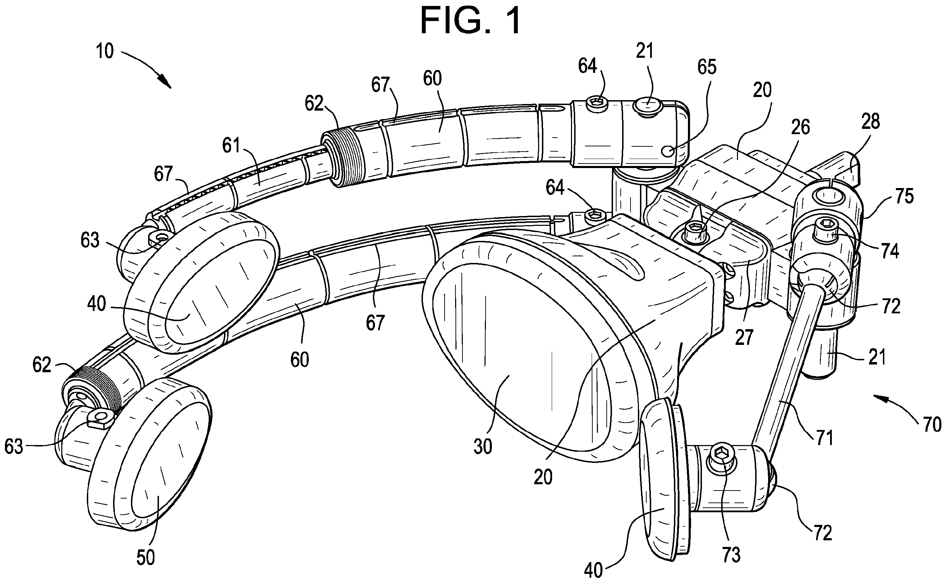

**FIG. 1** is a diagram that illustrates a perspective view of an exemplary head array system 10 in accordance with an embodiment of the present invention. Referring to **FIG. 1****,** there is shown a head array system 10. The head array system 10 may comprise one or more of occipital pad sensors or switches 30, lateral sensors or switches 40, and mode sensors or switches 50. Switches may be activated by applying a physical force to depress the switch, for example. Sensors may be activated by detecting an object within proximity of the sensor, for example. As an example, if a user's head is detected within certain proximity of a sensor (e.g., approximately 0.25 inches or 6 millimeters, among other things), the sensor may be activated. Although certain embodiments may refer to sensors, for example, unless so claimed, the scope of various aspects of the present invention should not be limited to sensors and may additionally and/or alternatively include switches as well, or vice versa.

Referring again to **FIG. 1****,** occipital pad sensor(s) 30 are attached to head array body 20. In various embodiments, occipital pad sensor(s) 30 include two sensors in one or more occipital pads. Occipital pad sensors 30 may be configured such that when both occipital pad sensors 30 are activated, a microprocessor (not shown) in head array body 20 receives the activation signals from the sensors 30 and generates a command signal corresponding to the activation of the sensors 30. In certain embodiments, if the microprocessor only receives an activation signal from one of the two sensors 30, the microprocessor does not generate a command signal. For example, if perspiration, hair product or some other form of moisture saturates a portion of the headrest pad protecting the occipital pad sensors 30, the moisture may create a conductive mass that causes an unintentional activation of one of the sensors 30. An occipital pad sensor 30 configuration where two sensor activation signals are used to generate a command signal at the microprocessor may reduce or prevent unintentional command signals to be generated at the microprocessor. In various embodiments, the microprocessor generates command signals in response to receiving activation signals from one or both of the occipital pad sensors 30. Although the above description of the occipital pad sensors 30 relates to configurations for two sensors, the use of more or less sensors is also contemplated. For example, occipital pad sensors 30 may comprise one or three sensors, among other things. Further, certain embodiments may omit the occipital pad sensors 30.

Certain embodiments provide one or more lateral sensors 40 that are attached to head array body 20 via lateral arms 60, 70. **FIGS. 1-7** illustrate two exemplary lateral arm embodiments, a telescoping lateral arm embodiment 60 and a swivel lateral arm embodiment 70 as discussed in more detail below. Although lateral sensors 40 are illustrated as attaching to head array body 20 using different lateral arm embodiments 60, 70, the various embodiments may use the same lateral arm embodiment or any combination of lateral arm embodiments. Further, although two lateral sensors 40 are illustrated in **FIGS. 1-7****,** the use of more or less lateral sensors is also contemplated. For example, one or three lateral sensors 40 may be used and may be attached at either side of head array body 20 using lateral arms 60, 70. Also, certain embodiments may omit the lateral sensors 40 and lateral arms 60, 70.

In response to activation of a lateral sensor or switch 40, an activation signal is sent via a cable, for example, that runs from the lateral sensor 40 to a microprocessor that may be housed in head array body 20. The cable may be secured by one or more o-rings, or any other suitable securing mechanism(s), in a channel or groove 67 in lateral arm 60, 70 and/or lateral arm telescoping extension 61 to manage the cable and present a clean finish. In response to receiving an activation signal from lateral sensor 40, the microprocessor generates a command signal corresponding to the activation of the sensor 40. For example, if a selected head array mode is a power wheelchair forward drive mode, activation of a lateral sensor 40 on a user's left results in an activation signal being sent to the microprocessor, which generates a command signal that may command the power wheelchair to turn left, depending on the configuration of the sensors 30, 40, 50. Additionally and/or alternatively, the command signal generated by the microprocessor may be provided to primary electronics (e.g., the power module) of the power wheelchair.

In various embodiments, one or more mode switches 50 may be attached to one or both sides of head array body 20 via lateral arms 60, 70. Although one mode switch 50 is illustrated in **FIGS. 1-7****,** the use of more or less mode switches is contemplated. For example, two mode switches 50 may be used and may be attached at one or both sides of head array body 20 using lateral arms 60, 70. Also, certain embodiments may omit the mode switch 50 and corresponding lateral arm 60, 70. In response to activation of mode switch 50, an activation signal is sent via a cable, for example, that runs from the mode switch 50 to a microprocessor that may be housed in head array body 20. The cable may be secured by one or more o-rings, or any other suitable securing mechanism(s), in a channel or groove 67 in lateral arm 60, 70 and/or lateral arm telescoping extension 61 to manage the cable and present a clean finish.

In various embodiments, in response to receiving an activation signal from mode switch 50, the microprocessor may generate a command signal corresponding to the activation of the mode switch 50 and output the command signal to primary electronics (e.g., the power module) of the power wheelchair. The command signal may be used by the primary electronics to alter the operating mode of the head array 10. For example, activation of mode switch 50 by a user results in an activation signal being sent to the microprocessor, which generates a command signal sent to primary electronics of the power wheelchair that may change the head array 10 operating mode from a power wheelchair forward drive mode to a power wheelchair reverse drive mode, among other things. As another example, activation of mode switch 50 by a user results in an activation signal being sent to the microprocessor, which generates a command signal sent to primary electronics of the power wheelchair that may change the head array 10 operating mode from a power wheelchair drive mode to a power wheelchair seat adjustment mode, among other things.

In certain embodiments, in response to receiving an activation signal from mode switch 50, the microprocessor may update an operating mode state in the corresponding microprocessor memory in response to receiving an activation signal from mode switch 50. For example, activation of mode switch 50 by a user results in an activation signal being sent to the microprocessor, which updates an operating mode state within the microprocessor memory that may change the head array 10 operating mode from a power wheelchair forward drive mode to a power wheelchair reverse drive mode, among other things. As another example, activation of mode switch 50 by a user results in an activation signal being sent to the microprocessor, which updates an operating mode state within the microprocessor memory that may change the head array 10 operating mode from a power wheelchair drive mode to a power wheelchair seat adjustment mode, among other things.

Certain embodiments provide telescoping lateral arm 60 for coupling sensor 40, 50 to head array body 20. Telescoping lateral arm 60 is adjustable such that a position of sensor 40, 50 may be set and/or changed based on user, clinician, technician or caregiver preferences, for example. Telescoping lateral arm 60 may be a rigid, curved, hollow tube comprising a telescoping extension 61, securing mechanisms 62-65 and/or rotational mechanisms 66, for example. Telescoping extension 61 may be a rigid, curved tube that is housed substantially within telescoping lateral arm 60 when in a non-extended position and may extend at least in part from telescoping lateral arm 60 at varying extension lengths, for example.

Securing mechanism 62 may lock telescoping extension 61 at a clinician, technician or caregiver selectable length. For example, securing mechanism 62 may lock telescoping extension 61 in a non-extended position or at any suitable extension point when in an extended position. As such, the position of the sensor 40, 50 may be adjustable in a horizontal plane extending in a direction substantially from a rear of the head array 10 to the front of the head array 10. Securing mechanism 62 may be a locking ring, clamp, bolt or any other suitable securing mechanism. In various embodiments, the securing mechanism 62 may be a toolless securing mechanism.

Securing mechanism 63 may secure sensor 40, 50 to telescoping extension 61 at rotational mechanism 66, for example. Sensor 40, 50 may be removed for cleaning or replacement, among other things, by removing or unlocking, for example, securing mechanism 63. Additionally and/or alternatively, loosening or unlocking, for example, securing mechanism 63 may allow for rotation of sensor 40, 50 around rotational mechanism 66 such that the angle that sensor 40, 50 is presented toward a user's head is adjustable. Sensor 40, 50 may be fixably secured at a selected angle by tightening or locking, for example, securing mechanism 63. In certain embodiments, securing mechanism 63 may be a clamp, bolt or any other suitable securing mechanism. In various embodiments, the securing mechanism 63 may be a toolless securing mechanism. Rotational mechanism 66 may be a ball joint or any other suitable rotational mechanism, for example.

In various embodiments, securing mechanism 64 secures telescoping lateral arm 60 at a desired rotation allowing sensor 40, 50 to be adjustable in a vertical plane. For example, sensor 40, 50 may be adjusted higher or lower by rotating the curved telescoping lateral arm 60 when the securing mechanism 64 is unlocked, loosened, or the like. Once the curved telescoping lateral arm 60 is rotated such that sensor 40, 50 is at a desired height, securing mechanism 64 may be tightened or locked, for example, such that the curved telescoping lateral arm 60 is fixably secured at the selected rotation. Securing mechanism 64 may be a clamp, bolt or any other suitable securing mechanism. In various embodiments, the securing mechanism 64 may be a toolless securing mechanism.

In certain embodiments, securing mechanism 65 may secure telescoping lateral arm 60 to head array body 20 at head array shaft 21, for example. Telescoping lateral arm 60 may be removed for cleaning, replacement, and/or reconfiguration of lateral arm 60 placement, among other things, by removing or unlocking, for example, securing mechanism 65. For example, a clinician, technician or caregiver may switch positions of sensor 40 and mode switch 50 by removing each of the lateral arms 60 and reattaching the lateral arms 60 at exchanged positions on head array shaft 21. Additionally and/or alternatively, loosening or unlocking, for example, securing mechanism 65 may allow for rotation of lateral arm 60 in a horizontal plane around head array shaft 21 such that the distance between sensor 40, 50 and a user's head is adjustable. Lateral arm 60 may be fixably secured at a selected position by tightening or locking, for example, securing mechanism 65. In certain embodiments, securing mechanism 65 may be a clamp, bolt or any other suitable securing mechanism. In various embodiments, the securing mechanism 65 may be a toolless securing mechanism.

Certain embodiments provide swiveling lateral arm 70 for coupling sensor 40, 50 to head array body 20. Swiveling lateral arm 70 is adjustable such that a position of sensor 40, 50 may be set and/or changed based on user, clinician, technician or caregiver preferences, for example. Swiveling lateral arm 70 may comprise a rod 71, securing mechanisms 73-75 and/or rotational mechanisms 72, for example. Rod 71 may be a rigid tube, for example. In certain embodiments, rod 71 may be hollow such that a cable running from sensor 40, 50 to the microprocessor in head array body 20 may be enclosed in hollow rod 71 to manage the cable and present a clean finish. In various embodiments, rod 71 may be a solid rod 71 such that a cable running from sensor 40, 50 to the microprocessor in head array body 20 may be detachably coupled to an outer surface of rod 71. In an embodiment, rod 71 may comprise a groove or channel such that the cable may be secured by one or more o-rings, or any other suitable securing mechanism(s), in the groove or channel of rod 71 to manage the cable and present a clean finish.

Securing mechanism 73 may secure sensor 40, 50 to one end of rod 71 at rotational mechanism 72, for example. Sensor 40, 50 may be removed for cleaning or replacement, among other things, by removing or unlocking, for example, securing mechanism 73. Additionally and/or alternatively, loosening or unlocking, for example, securing mechanism 73 may allow for rotation of sensor 40, 50 around rotational mechanism 72 such that the angle that sensor 40, 50 is presented toward a user's head is adjustable. Sensor 40, 50 may be fixably secured at a selected angle by tightening or locking, for example, securing mechanism 73. In certain embodiments, securing mechanism 73 may be a clamp, bolt or any other suitable securing mechanism. In various embodiments, the securing mechanism 73 may be a toolless securing mechanism. Rotational mechanism 72 may be a ball joint or any other suitable rotational mechanism, for example.

In various embodiments, securing mechanism 74 secures rod 71 at a desired rotation using rotational mechanism 72 to allow sensor 40, 50 to be adjustable in vertical and horizontal planes. For example, sensor 40, 50 may be adjusted higher or lower and nearer or farther from a user's head by rotating the rod 71 at rotational mechanism 72 when the securing mechanism 74 is unlocked, loosened, or the like. Once the rod 71 is rotated such that sensor 40, 50 is at a desired height and distance from a user's head, securing mechanism 74 may be tightened or locked, for example, such that the rod 71 is fixably secured at the selected rotation. Securing mechanism 74 may be a clamp, bolt or any other suitable securing mechanism. In various embodiments, the securing mechanism 74 may be a toolless securing mechanism. Rotational mechanism 72 may be a ball joint or any other suitable rotational mechanism, for example.

In certain embodiments, securing mechanism 75 may secure swiveling lateral arm 70 to head array body 20 at head array shaft 21, for example. Swiveling lateral arm 70 may be removed for cleaning, replacement, and/or reconfiguration of lateral arm 70 placement, among other things, by removing or unlocking, for example, securing mechanism 75. For example, a clinician, technician or caregiver may switch positions of sensor 40 and mode switch 50 by removing each of the lateral arms 60, 70 and reattaching the lateral arms 60, 70 at exchanged positions on head array shafts 21. Additionally and/or alternatively, loosening or unlocking, for example, securing mechanism 75 may allow for rotation of lateral arm 70 in a horizontal plane around head array shaft 21 such that the distance between sensor 40, 50 and a user's head is further adjustable. Lateral arm 70 may be fixably secured at a selected position by tightening, or locking, for example, securing mechanism 75. In certain embodiments, securing mechanism 75 may be a clamp, bolt or any other suitable securing mechanism. In various embodiments, the securing mechanism 75 may be a toolless securing mechanism.

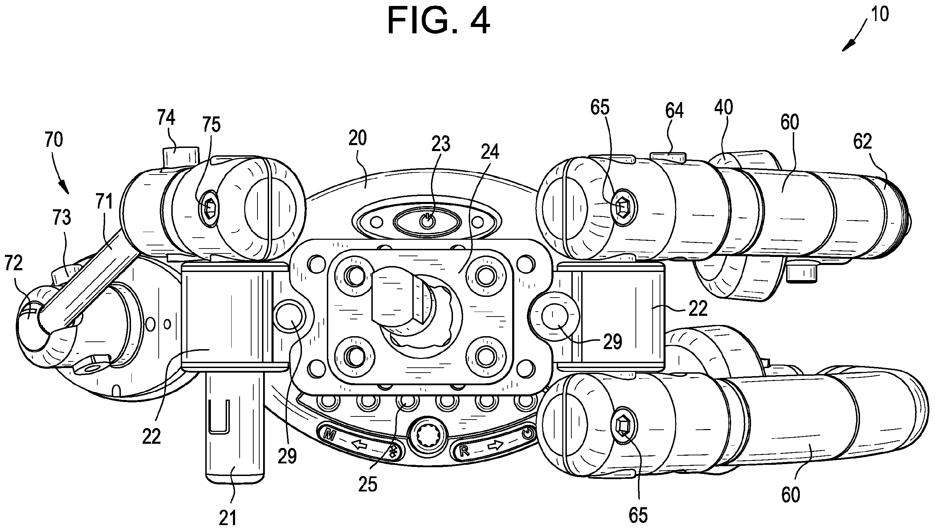

Head array body 20 comprises head array shafts 21, shaft attachments 22, enable/disable mechanism 23, mounting plate 24, input jacks 25, output interface (not shown), ball swivel joint 26, ball swivel joint mount 27, wheelchair mount 28 and/or swivel release mechanisms 29, for example, which are discussed in more detail below with regard to **FIG.** 4.

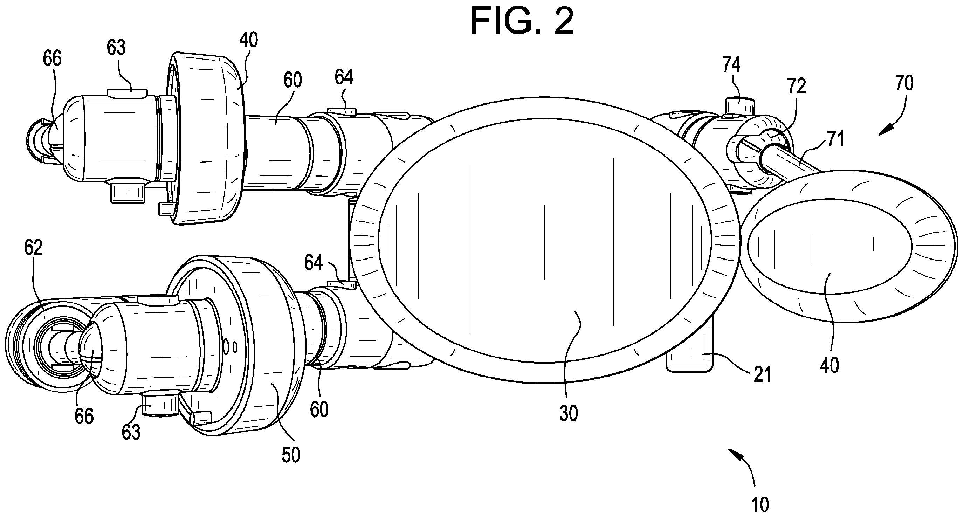

**FIG. 2** is a diagram that illustrates a front view of an exemplary head array system 10 in accordance with an embodiment of the present invention. Referring to **FIG. 2****,** there is shown a head array 10 comprising occipital pad sensor 30, lateral sensors 40 and mode switch 50. Occipital pad sensor 30 is attached to head array body 20 as illustrated in **FIGS. 1****,** **3** **and** **5****-7.** Lateral arms 60, 70 couple sensors 40, 50 to head array body 20 at shafts 21. Telescoping lateral arm 60 may comprise a telescoping extension 61, securing mechanisms 62-65 and/or rotational mechanisms 66, for example. Swiveling lateral arm 70 may comprise a rod 71, securing mechanisms 73-75 and/or rotational mechanisms 72, for example. The head array 10 illustrated in **FIG. 2** shares various characteristics with the head array 10 illustrated in **FIG. 1** as described above.

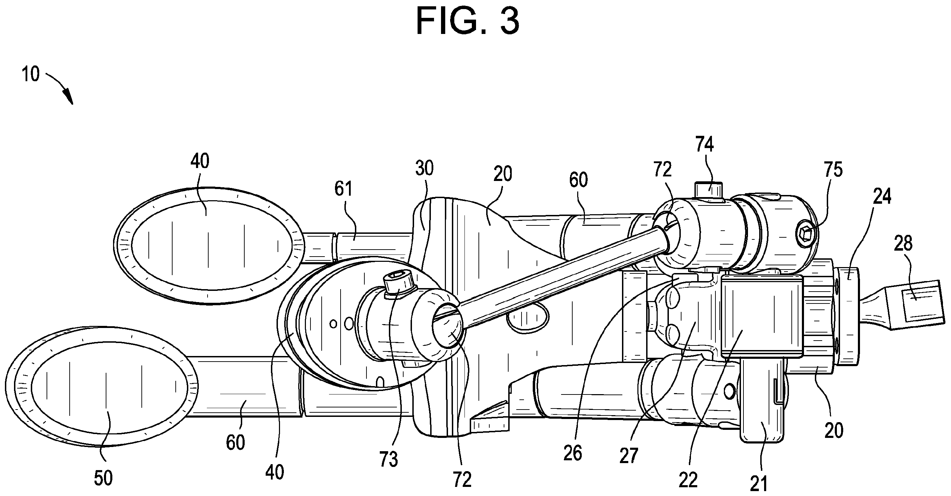

**FIG. 3** is a diagram that illustrates a side view of an exemplary head array system 10 in accordance with an embodiment of the present invention. Referring to **FIG. 3****,** there is shown a head array 10 comprising head array body 20, occipital pad sensor 30, lateral sensors 40 and mode switch 50. Head array body 20 comprises head array shafts 21, shaft attachments 22, enable/disable mechanism 23, mounting plate 24, input jacks 25, output interface (not shown), ball swivel joint 26, ball swivel joint mount 27, wheelchair mount 28 and/or swivel release mechanisms 29, for example. Occipital pad sensor 30 is attached to head array body 20. Lateral arms 60, 70 couple sensors 40, 50 to head array body 20 at shafts 21. Telescoping lateral arm 60 may comprise a telescoping extension 61, securing mechanisms 62-65 and/or rotational mechanisms 66, for example. Swiveling lateral arm 70 may comprise a rod 71, securing mechanisms 73-75 and/or rotational mechanisms 72, for example. The head array 10 illustrated in **FIG. 3** shares various characteristics with the head array 10 illustrated in **FIGS. 1-2** as described above.

**FIG. 4** is a diagram that illustrates a rear view of an exemplary head array system 10 in accordance with an embodiment of the present invention. Referring to **FIG. 4****,** there is shown a head array 10 comprising head array body 20, lateral sensors 40 and mode switch 50. Lateral arms 60, 70 couple sensors 40, 50 to head array body 20 at shafts 21. Telescoping lateral arm 60 may comprise a telescoping extension 61, securing mechanisms 62-65 and/or rotational mechanisms 66, for example. Swiveling lateral arm 70 may comprise a rod 71, securing mechanisms 73-75 and/or rotational mechanisms 72, for example.

Head array body 20 comprises head array shafts 21, shaft attachments 22, enable/disable mechanism 23, mounting plate 24, input jacks 25, output interface (not shown), ball swivel joint 26, ball swivel joint mount 27, wheelchair mount 28 and/or swivel release mechanisms 29, for example. Head array shafts 21 are attached to head array body 20 by shaft attachments 22. Each head array shaft 21 may be capable of receiving at least two lateral arms 60, 70. In various embodiments, shaft attachments 22 may attach to each head array shaft 21 such that each shaft 21 comprises an upper portion and a lower portion. Each of the upper and lower portions of each head array shaft 21 may be capable of receiving one or more lateral arms 60, 70. Lateral arms 60, 70 may be detachably coupled to shafts 21 such that lateral arms 60, 70 may be removed for cleaning, replacement, and/or reconfiguration of lateral arm 60, 70 placement, among other things, by removing or unlocking, for example, securing mechanism 65, 75. For example, a clinician, technician or caregiver may switch positions of sensor 40 and mode switch 50 by removing each of the lateral arms 60, 70 and reattaching the lateral arms 60, 70 at exchanged positions on head array shafts 21. Lateral arms 60, 70 may be fixably secured at a selected position on shafts 21 by tightening or locking, for example, securing mechanism 65, 75.

In various embodiments, enable/disable mechanism 23 may provide an indication to a microprocessor (not shown) housed in head array body 20 indicating whether the microprocessor should generate command signals in response to received activation signals from sensors 30, 40, 50. For example, if a disable mode for head array 10 is selected by a user or caregiver using the enable/disable mechanism 23, activation of sensors 30, 40, 50 would not result in commands being sent to power wheelchair and/or accessory components from head array 10. If an enable mode for head array 10 is selected by a user or caregiver using the enable/disable mechanism 23, activation of sensors 30, 40, 50 causes the microprocessor to generate corresponding command signals that are sent to power wheelchair and/or accessory components via an output interface (not shown) on head array body 20. Output interface may be a nine-pin sub-D connector, for example, or any other suitable output interface. Enable/disable mechanism 23 may be a button, switch or any other suitable enable/disable mechanism, for example.

In certain embodiments, enable/disable mechanism 23 may turn the power on (enable) and off (disable). For example, if a disable mode for head array 10 is selected by a user or caregiver using the enable/disable mechanism 23, sensors 30, 40, 50 may not be activated. If an enable mode for head array 10 is selected by a user or caregiver using the enable/disable mechanism 23, activation of sensors 30, 40, 50 causes the microprocessor to generate corresponding command signals that are sent to power wheelchair and/or accessory components via an output interface (not shown) on head array body 20. Output interface may be a nine-pin sub-D connector, for example, or any other suitable output interface. Enable/disable mechanism 23 may be a button, switch or any other suitable enable/disable mechanism, for example.

Certain embodiments provide a mounting plate 24 attached to head array body 20 for securing a wheelchair mount 28 that couples the head array 10 to a wheelchair. Wheelchair mount 28 may be any suitable mount capable of holding head array 10 in a fixed position around a user's head. Mounting plate 24 may be any suitable mounting plate capable of attaching to wheelchair mount 28. In certain embodiments, head array body 20 may be compatible with different mounting plate types. In various embodiments, the mounting plate 24 type used may correspond to the wheelchair mount 28 used. In certain embodiments, mounting plate 24 and wheelchair mount 28 may be integrated into a single component.

In various embodiments, head array body 20 comprises input jacks 25 operable to receive cable plugs from sensors 30, 40, 50, and the like. As noted above, existing head array devices are bulky and have disorganized cable management with multiple cable connections at different points on or around the power wheelchair. For example, cables can be untidily attached to an outer surface of the lateral arms. As another example, cables from different switches or sensors of existing head array devices may be routed to separate control boxes located at various locations on or around the power wheelchair. Certain embodiments provide cables neatly routed in channels or grooves 67 of lateral arm 60, 70 and/or lateral arm telescoping extension 61 to a central collection of input jacks 25 at head array body 20. The cable management between sensors 30, 40, 50 and input jacks 25 provides a clean finish. A clinician, technician or caregiver may set-up and/or change the configuration of the head array 10 based on the selection of which cable plug from each sensor 30, 40, 50 is plugged into each one of the input jacks 25. For example, if a cable from occipital pad sensor 30 plugged into a first input jack 25 is instead plugged into a fourth input jack 25, the microprocessor may generate a different command signal in response to receiving an activation signal from occipital pad sensor 30.

In certain embodiments, ferrite beads, or any other suitable electromagnetic suppression mechanism, may be used on cables at or near sensors 30, 40, 50 to allow head array 10 to comply with electromagnetic compatibility (EMC), electromagnetic interference (EMI), and electrostatic discharge (ESD) standards.

Certain embodiments provide adjustability of a front portion of head array body 20 relative to a rear portion of head array body 20 such that a position of an occipital pad may be adjusted. For example, head array body 20 may comprise a ball swivel joint mount 27 including a ball swivel joint 26 at a central portion of head array body 20 allowing movement of the front portion of head array body 20 attached to the occipital pad. As such, sensor 30 may be angled up, down, left or right by rotating the front portion of head array body 20 at ball swivel joint 26 or any other suitable rotational mechanism when a securing mechanism (not shown) is unlocked, loosened, or the like. Once the front portion of head array body 20 is rotated such that sensor 30 is at a desired position, the securing mechanism may be tightened, locked or the like, such that the front portion of head array body 20 is fixably secured at the selected position. The securing mechanism may be a clamp, bolt or any other suitable securing mechanism. In various embodiments, the securing mechanism may be a toolless securing mechanism. Further, the rotational mechanism 26, 27 may be any suitable rotational mechanism, for example.

In certain embodiments, head array body 20 comprises a swivel release mechanism 29 for allowing lateral arms 60, 70 to swing away from a user's head such that a caregiver can approach the user's head, for example. Swing release mechanism 29 may include an index for allowing the lateral arms 60, 70 to snap back in the original position such that manual repositioning of lateral arms 60, 70 is not required. In various embodiments, multiple swing release mechanisms 29 may be provided, each of the swing release mechanisms 29 corresponding to a shaft 21 and/or lateral arm 60, 70. In embodiments where a swing release mechanism 29 corresponds to a shaft 21 and more than one lateral arm 60, 70 is coupled to the shaft 21, activation of the swing release mechanism 29 may allow the lateral arms 60, 70 to swing away from a user's head in unison, for example.

The head array 10 illustrated in **FIG. 4** shares various characteristics with the head array 10 illustrated in **FIGS. 1-3** as described above.

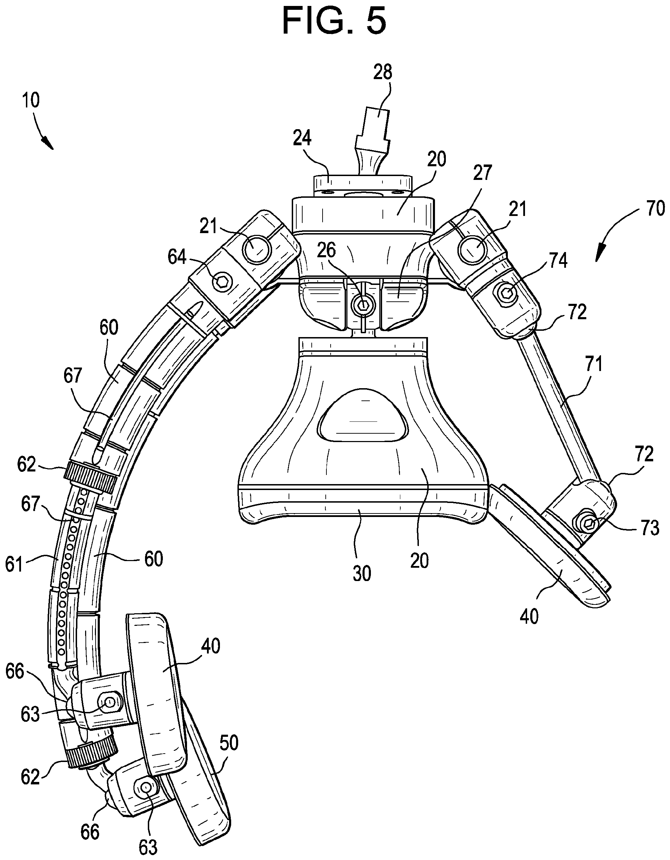

**FIG. 5** is a diagram that illustrates a top view of an exemplary head array system 10 in accordance with an embodiment of the present invention. Referring to **FIG. 5****,** there is shown a head array 10 comprising head array body 20, occipital pad sensor 30, lateral sensors 40 and mode switch 50. Head array body 20 comprises head array shafts 21, shaft attachments 22, enable/disable mechanism 23, mounting plate 24, input jacks 25, output interface (not shown), ball swivel joint 26, ball swivel joint mount 27, wheelchair mount 28 and/or swivel release mechanisms 29, for example. Occipital pad sensor 30 is attached to head array body 20. Lateral arms 60, 70 couple sensors 40, 50 to head array body 20 at shafts 21. Telescoping lateral arm 60 may comprise a telescoping extension 61, securing mechanisms 62-65 and/or rotational mechanisms 66, for example. Swiveling lateral arm 70 may comprise a rod 71, securing mechanisms 73-75 and/or rotational mechanisms 72, for example. The head array 10 illustrated in **FIG. 5** shares various characteristics with the head array 10 illustrated in **FIGS. 1-4** as described above.

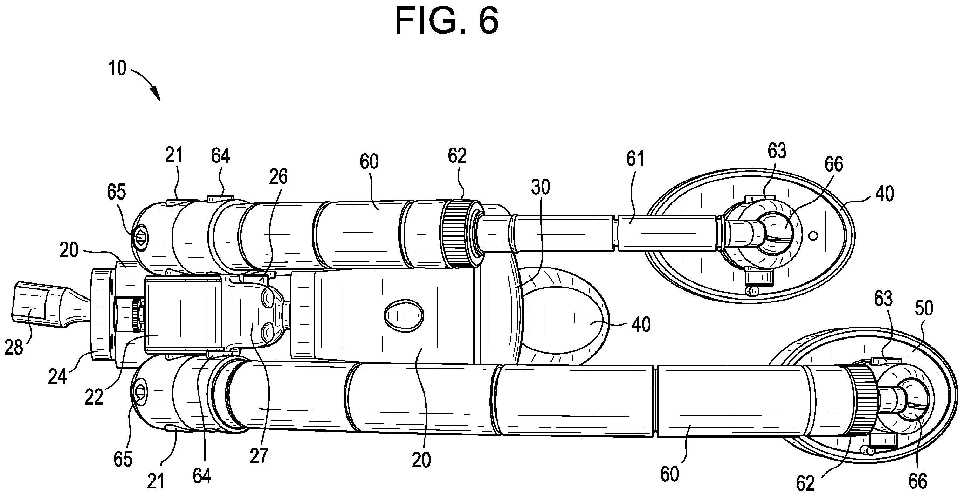

**FIG. 6** is a diagram that illustrates a side view of an exemplary head array system 10 in accordance with an embodiment of the present invention. Referring to **FIG. 6****,** there is shown a head array 10 comprising head array body 20, occipital pad sensor 30, lateral sensors 40 and mode switch 50. Head array body 20 comprises head array shafts 21, shaft attachments 22, enable/disable mechanism 23, mounting plate 24, input jacks 25, output interface (not shown), ball swivel joint 26, ball swivel joint mount 27, wheelchair mount 28 and/or swivel release mechanisms 29, for example. Occipital pad sensor 30 is attached to head array body 20. Lateral arms 60, 70 couple sensors 40, 50 to head array body 20 at shafts 21. Telescoping lateral arm 60 may comprise a telescoping extension 61, securing mechanisms 62-65 and/or rotational mechanisms 66, for example. The head array 10 illustrated in **FIG. 6** shares various characteristics with the head array 10 illustrated in **FIGS. 1-5** as described above.

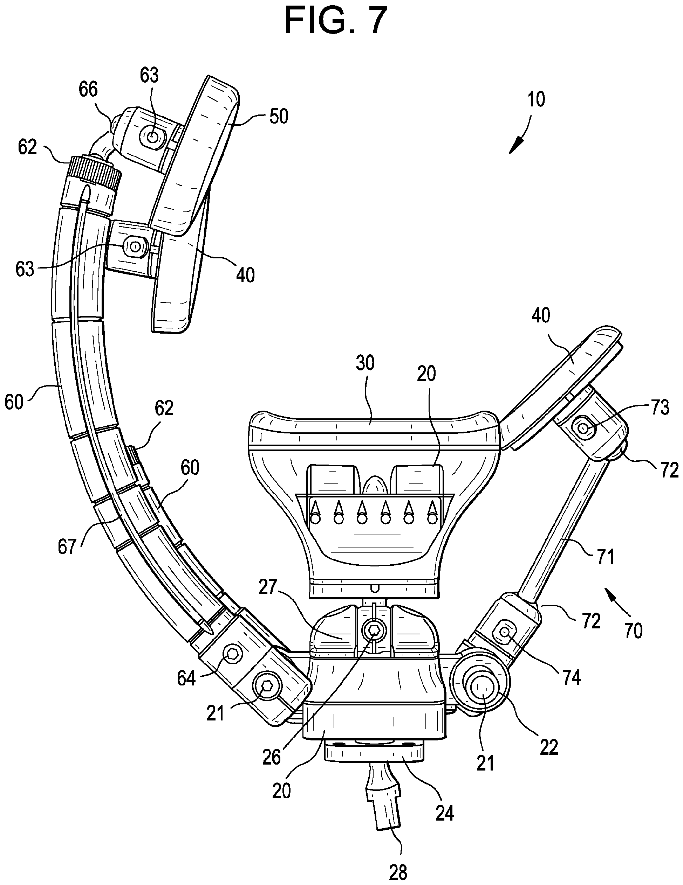

**FIG. 7** is a diagram that illustrates a bottom view of an exemplary head array system 10 in accordance with an embodiment of the present invention. Referring to **FIG. 7****,** there is shown a head array 10 comprising head array body 20, occipital pad sensor 30, lateral sensors 40 and mode switch 50. Head array body 20 comprises head array shafts 21, shaft attachments 22, enable/disable mechanism 23, mounting plate 24, input jacks 25, output interface (not shown), ball swivel joint 26, ball swivel joint mount 27, wheelchair mount 28 and/or swivel release mechanisms 29, for example. Occipital pad sensor 30 is attached to head array body 20. Lateral arms 60, 70 couple sensors 40, 50 to head array body 20 at shafts 21. Telescoping lateral arm 60 may comprise a telescoping extension 61, securing mechanisms 62-65 and/or rotational mechanisms 66, for example. Swiveling lateral arm 70 may comprise a rod 71, securing mechanisms 73-75 and/or rotational mechanisms 72, for example. The head array 10 illustrated in **FIG. 7** shares various characteristics with the head array 10 illustrated in **FIGS. 1-6** as described above.

Certain embodiments provide a head array system 10 for a power wheelchair, comprising a head array body 20 and one or more lateral arms 60, 70. The head array body 20 comprises shafts 21. Each of the shafts 21 comprises lateral arm receiving sections. The one or more lateral arms 60, 70 are detachably coupled to one of the lateral arm receiving sections of one of the shafts 21.

In various embodiments, the one or more lateral arms 60, 70 comprise a plurality of lateral arms 60, 70. Each of the plurality of lateral arms 60, 70 is detachably coupled to one of the lateral arm receiving sections of one of the shafts 21. In an embodiment, the head array system 10 is reconfigurable by removing at least one of the plurality of lateral arms 60, 70 from the one of the lateral arm receiving sections and reattaching the removed at least one of the plurality of lateral arms 60, 70 to another of the lateral arm receiving sections of one of the shafts 21.

In certain embodiments, the head array system 10 comprises one or more of a switch 40, 50 and a sensor 40, 50 coupled to the head array body 20 via the one or more lateral arms 60, 70. In an embodiment, the head array body 20 comprises input jacks 25. Each of the input jacks 25 is operable to receive a cable plug from the one or more of the switch 40, 50 and the sensor 40, 50. In an embodiment, the head array body 20 comprises a microprocessor and an enable/disable mechanism 23. The enable/disable mechanism 23 instructs the microprocessor to generate command signals in response to received activation signals from the one or more of the switch 40, 50 and the sensor 40, 50 if the enable/disable mechanism 23 is in a selected enable mode. The enable/disable mechanism 23 instructs the microprocessor to disregard received activation signals from the one or more of the switch 40, 50 and the sensor 40, 50 if the enable/disable mechanism 23 is in a selected disable mode.

In various embodiments, the head array body 20 comprises shaft attachments 22. Each of the shaft attachments 22 attaches to one of the shafts 21 such that each of the shafts 21 comprises an upper portion and a lower portion. Each of the upper portion and the lower portion of each of the shafts 21 is operable to receive one of the plurality of lateral arms 60, 70. In an embodiment, the head array body 20 comprises a ball swivel joint mount 27 comprising a ball swivel joint 26 at a central portion of the head array body 20 allowing movement of a front portion of the head array body 20 relative to a rear portion of the head array body 20.

In certain embodiments, the head array body 20 comprises a swivel release mechanism 29 operable to release the one or more lateral arms 60, 70 from an original position such that the one or more lateral arms 60, 70 are rotated away from the head array body 20. The swing release mechanism 29 comprises an index such that the one or more lateral arms snap back in the original position when the one or more lateral arms is rotated toward the head array body 20. In an embodiment, the head array system 10 complies with electromagnetic compatibility (EMC), electromagnetic interference (EMI), and electrostatic discharge (ESD) standards.

Certain embodiments provide a head array system 10 for a power wheelchair, comprising a head array body 20, one or more of a sensor 40, 50 and a switch 40, 50, and one or more lateral arms 60 operable to couple the one or more of the sensor 40, 50 and the switch 40, 50 to the head array body 20. The one or more lateral arms 60 comprise a hollow, curved lateral arm tube 60 attached to the head array body 20, a curved telescoping extension 61 attached to the one or more of the sensor 40, 50 and the switch 40, 50, and a first securing mechanism 62. The telescoping extension 61 is slidable from a selectable non-extended position, where the telescoping extension 61 is substantially housed within the lateral tube 60, to selectable extension positions at least partially outside of the lateral arm tube 60. The first securing mechanism 62 is operable to lock the telescoping extension 61 into one or more of the selectable non-extended positions and the selectable extension positions.

In various embodiments, the first securing mechanism 62 is a toolless locking ring. In an embodiment, the head array system 10 comprises a second securing mechanism 63 operable to secure the one or more of the sensor 40, 50 and the switch 40, 50 to the telescoping extension 61 at a rotational mechanism 66. In an embodiment, the second securing mechanism 63 in an unlocked position allows for rotation of the one or more of the sensor 40, 50 and the switch 40, 50 around the rotational mechanism 66 such that a presentation angle of the one or more of the sensor 40, 50 and the switch 40, 50 is selectable, and/or allows for removal of the one or more of the sensor 40, 50 and the switch 40, 50.

In certain embodiments, the second securing mechanism 63 in a locked position fixably secures the one or more of the sensor 40, 50 and the switch 40, 50 to the telescoping extension 61 at the selected presentation angle. In an embodiment, the rotational mechanism 66 is a ball joint.

In various embodiments, the one or more lateral arms 60 comprise a second securing mechanism 64 operable to secure the one or more lateral arms 60 at a selected rotation in a vertical plane. The second securing mechanism 64 in an unlocked position allows for rotation of the one or more lateral arms 60 to a selected position in the vertical plane. The second securing mechanism 64 in a locked position fixably secures the one or more lateral arms at the selected position in the vertical plane.

In certain embodiments, the head array body 20 comprises one or more shafts 21 and the one or more lateral arms 60 comprise a second securing mechanism 65 operable to secure the one or more lateral arms 60 to the head array body 20. In an embodiment, the second securing mechanism 65 in an unlocked position allows for rotation of the one or more lateral arms in a horizontal plane around the one or more shafts such that a distance between the one or more of the sensor 40, 50 and the switch 40, 50 and a user's head is selectable, and/or allows for removal of the one or more lateral arms 60. In an embodiment, the second securing mechanism 65 in a locked position fixably secures the one or more lateral arms 60 to the one or more shafts 21 of the head array body 20 at the selected distance.

Certain embodiments provide a head array system 10 for a power wheelchair, comprising a head array body 20 and an occipital pad. The head array body 20 comprises a microprocessor configured to generate command signals in response to sensor activation signals. The occipital pad is attached to the head array body 20 and comprises a plurality of sensors 30. Each of the plurality of sensors 30 is configured to transmit an activation signal to the microprocessor in response to sensor activation. The microprocessor generates a command signal if the microprocessor receives the activation signal from all of the plurality of sensors 30 in the occipital pad, and disregards the activation signal if the microprocessor receives the activation signal from less than all of the plurality of sensors 30 in the occipital pad.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A head array system (10) for a power wheelchair, comprising:
a head array body (20) comprising shafts (21), wherein each of the shafts comprises lateral arm receiving sections; and
at least one lateral arm (60, 70) detachably coupled to one of the lateral arm receiving sections of one of the shafts (21); and
at least one of a switch and a sensor (40, 50) coupled to the head array body (20) via the at least one lateral arm (60, 70),
wherein the head array body (20) comprises a microprocessor and an enable/disable mechanism (23), wherein the enable/disable mechanism
is configured to instruct the microprocessor to:
generate command signals in response to received activation signals from the at least one of the switch and the sensor (40, 50) if the enable/disable mechanism (23) is in a selected enable mode, and
disregard received activation signals from the at least one of the switch and the sensor (40, 50) if the enable/disable mechanism (23) is in a selected disable mode.

2. The head array system (10) according to claim 1, wherein the at least one lateral arm (60, 70) comprises a plurality of lateral arms (60, 70), each of the plurality of lateral arms detachably coupled to one of the lateral arm receiving sections of one of the shafts (21).

3. The head array system (10) according to claim 2, wherein the head array system is reconfigurable by removing at least one of the plurality of lateral arms (60, 70) from the one of the lateral arm receiving sections and reattaching the removed at least one of the plurality of lateral arms (60, 70) to another of the lateral arm receiving sections of one of the shafts (21).

4. The head array system (10) according to claim 1, wherein the head array body (20) comprises input jacks (25), wherein the input jacks (25) are each operable to receive a cable plug from the at least one of the switch and the sensor (40, 50).

5. The head array system (10) according to claim 2, wherein the head array body (20) comprises shaft attachments (22), wherein each of the shaft attachments (22) attaches to one of the shafts (21) such that each of the shafts comprises an upper portion and a lower portion, and wherein each of the upper portion and the lower portion of each of the shafts is operable to receive one of the plurality of lateral arms (60, 70).

6. The head array system (10) according to claim 1, wherein the head array body (20) comprises
(i) a ball swivel joint mount (27) comprising a ball swivel joint (26) at a central portion of the head array body (20) allowing movement of a front portion of the head array body (20) relative to a rear portion of the head array body (20); or
(ii) a swivel release mechanism (29) operable to release the at least one lateral arm (60, 70) from an original position such that the at least one lateral arm is rotated away from the head array body (20), the swing release mechanism (29) comprising an index such that the at least one lateral arm snaps back in the original position when the at least one lateral arm is rotated toward the head array body (20).

7. The head array system (10) according to claim 1, wherein the head array system complies with electromagnetic compatibility (EMC), electromagnetic interference (EMI), and electrostatic discharge (ESD) standards.

8. The head array system (10) according to claim 1, wherein the at least one lateral arm (60, 70) comprises:
a hollow, curved lateral arm tube attached to the head array body (20),
a curved telescoping extension (61) attached to the at least one of the sensor and the switch (40, 50), wherein the telescoping extension is slidable from a selectable non-extended position, where the telescoping extension is substantially housed within the lateral tube, to selectable extension positions at least partially outside of the lateral arm tube, and
a first securing mechanism (62) operable to lock the telescoping extension (61) into at least one of the selectable non-extended position and the selectable extension positions.

9. The head array system (10) according to claim 8, wherein the first securing mechanism (62) is a toolless locking ring.

10. The head array system (10) according to claim 8, comprising a second securing mechanism (63) operable to secure the at least one of the sensor and the switch (40, 50) to the telescoping extension (61) at a rotational mechanism.

11. The head array system (10) according to claim 10, wherein the second securing mechanism (63) in an unlocked position allows for at least one of:
rotation of the at least one of the sensor and the switch (40, 50) around the rotational mechanism such that a presentation angle of the at least one of the sensor and the switch is selectable, and
removal of the at least one of the sensor and the switch.

12. The head array system (10) according to claim 11, wherein
(i) the second securing mechanism (63) in a locked position fixably secures the at least one of the sensor and the switch (40, 50) to the telescoping extension (61) at the selected presentation angle;
or
(ii) the rotational mechanism is a ball joint.

13. The head array system (10) according to claim 8, wherein the at least one lateral arm (60, 70) comprises a second securing mechanism (64) operable to secure the at least one lateral arm at a selected rotation in a vertical plane, wherein the second securing mechanism in an unlocked position allows for rotation of the at least one lateral arm to a selected position in the vertical plane, and wherein the second securing mechanism in a locked position fixably secures the at least one lateral arm (60, 70) at the selected position in the vertical plane.

14. The head array system (10) according to claim 8, wherein the head array body (20) comprises at least one shaft (21) and the at least one lateral arm (60, 70) comprises a second securing mechanism (65) operable to secure the at least one lateral arm to the head array body (20).

15. The head array system (10) according to claim 14, wherein the second securing mechanism (65) in an unlocked position allows for at least one of:
rotation of the at least one lateral arm (60, 70) in a horizontal plane around the at least one shaft (21) such that a distance between the at least one of the sensor and the switch (40, 50) and a user's head is selectable, and
removal of the at least one lateral arm (60, 70).

16. The head array system (10) according to claim 15, wherein the second securing mechanism (65) in a locked position fixably secures the at least one lateral arm (60, 70) to the at least one shaft (21) of the head array body (20) at the selected distance.

17. The head array system (10) according to claim 1, comprising:
a plurality of sensors (30) in an occipital pad attached to the head array body (20), each of the plurality of sensors configured to transmit an activation signal to the microprocessor in response to sensor activation,
wherein the microprocessor is configured to:
generate a command signal if the microprocessor receives the activation signal from all of the plurality of sensors (30) in the occipital pad, and
disregard the activation signal if the microprocessor receives the activation signal from less than all of the plurality of sensors (30) in the occipital pad.

## Patentansprüche

1. Kopfanordnungssystem (10) für einen angetriebenen Rollstuhl, umfassend:
ein Kopfanordnungsgehäuse (20), der Wellen (21) umfasst, wobei jede der Wellen Seitenarmaufnahmeabschnitte umfasst; und
mindestens einen Seitenarm (60, 70), der lösbar mit einem der Seitenarmaufnahmeabschnitte einer der Wellen (21) gekoppelt ist; und
mindestens einen Schalter oder einen Sensor (40, 50), der über den mindestens einen Seitenarm (60, 70) mit dem Kopfanordnungsgehäuse (20) gekoppelt ist,
wobei das Kopfanordnungsgehäuse (20) einen Mikroprozessor und einen Aktivierungs-/Deaktivierungsmechanismus (23) umfasst, wobei der Aktivierungs-/Deaktivierungsmechanismus dazu ausgelegt ist, den Mikroprozessor anzuweisen:
Befehlssignale als Reaktion auf empfangene Aktivierungssignale von mindestens einem des Schalters und des Sensors (40, 50) zu erzeugen, wenn sich der Aktivierungs-/Deaktivierungsmechanismus (23) in einem ausgewählten Aktivierungsmodus befindet, und
empfangene Aktivierungssignale von mindestens einem des Schalters und des Sensors (40, 50) zu ignorieren, wenn sich der Aktivierungs-/Deaktivierungsmechanismus (23) in einem ausgewählten Deaktivierungsmodus befindet.

2. Kopfanordnungssystem (10) gemäß Anspruch 1, wobei der mindestens eine Seitenarm (60, 70) eine Vielzahl von Seitenarmen (60, 70) umfasst, wobei jeder der Vielzahl von Seitenarmen abnehmbar mit einem der Seitenarmaufnahmeabschnitte einer der Wellen (21) gekoppelt ist.

3. Kopfanordnungssystem (10) gemäß Anspruch 2, wobei das Kopfanordnungssystem rekonfigurierbar ist, indem mindestens einer der Vielzahl von Seitenarme (60, 70) von dem einen der Seitenarmaufnahmeabschnitte entfernt wird und der entfernte mindestens eine der Vielzahl von Seitenarmen (60, 70) wieder an einem anderen der Seitenarmaufnahmeabschnitte einer der Wellen (21) angebracht wird.

4. Kopfanordnungssystem (10) gemäß Anspruch 1, wobei das Kopfanordnungsgehäuse (20) Eingangsbuchsen (25) umfasst, wobei die Eingangsbuchsen (25) jeweils dazu betreibbar sind, einen Kabelstecker von mindestens einem des Schalters und des Sensors (40, 50) aufzunehmen.

5. Kopfanordnungssystem (10) gemäß Anspruch 2, wobei das Kopfanordnungsgehäuse (20) Wellenbefestigungen (22) umfasst, wobei jede der Wellenbefestigungen (22) an einer der Wellen (21) derart angebracht ist, dass jeder der Wellen einen oberen Abschnitt und einen unteren Abschnitt umfasst, und wobei jeder der oberen Abschnitte und der unteren Abschnitte jeder Welle betätigbar ist, um einen der Vielzahl von Seitenarmen (60, 70) aufzunehmen.

6. Kopfanordnungssystem (10) gemäß Anspruch 1, wobei das Kopfanordnungsgehäuse (20) umfasst:
(i) eine Kugeldrehgelenkhalterung (27), die ein Kugeldrehgelenk (26) an einem mittigen Abschnitt des Kopfanordnungsgehäuses (20) umfasst, das eine Bewegung eines vorderen Abschnitts des Kopfanordnungsgehäuses (20) relativ zu einem hinteren Abschnitt des Kopfanordnungsgehäuses (20) ermöglicht;
oder
(ii) einen Schwenkfreigabemechanismus (29), der dazu betätigbar ist, den mindestens einen Seitenarm (60, 70) aus einer ursprünglichen Position freizugeben, sodass der mindestens eine Seitenarm von dem Kopfanordnungsgehäuse (20) weggedreht wird, wobei der Schwenkfreigabemechanismus (29) einen Index umfasst, sodass der mindestens eine Seitenarm in die ursprüngliche Position zurückschnappt, wenn der mindestens eine Seitenarm zu dem Kopfanordnungsgehäuse (20) hin gedreht wird.

7. Kopfanordnungssystem (10) gemäß Anspruch 1, wobei das Kopfanordnungssystem den Normen für elektromagnetische Verträglichkeit (EMC), elektromagnetische Interferenz (EMI) und elektrostatische Entladung (ESD) entspricht.

8. Kopfanordnungssystem (10) gemäß Anspruch 1, wobei der mindestens eine Seitenarm (60, 70) umfasst:
ein hohles, gekrümmtes Seitenarmrohr, das am Kopfanordnungsgehäuse (20) befestigt ist,
eine gekrümmte Teleskopverlängerung (61), die an mindestens einem des Sensors und des Schalters (40, 50) angebracht ist, wobei die Teleskopverlängerung aus einer wählbaren nicht ausgefahrenen Position, in der die Teleskopverlängerung im Wesentlichen innerhalb des seitlichen Rohrs untergebracht ist, in wählbare ausgefahrene Position mindestens teilweise außerhalb des Seitenarmrohrs verschiebbar ist, und
einen ersten Sicherungsmechanismus (62), der dazu betätigbar ist, die Teleskopverlängerung (61) in mindestens einer der wählbaren nicht ausgefahrenen Position und der wählbaren ausgefahrenen Positionen zu verriegeln.

9. Kopfanordnungssystem (10) gemäß Anspruch 8, wobei der erste Sicherungsmechanismus (62) ein werkzeugloser Verriegelungsring ist.

10. Kopfanordnungssystem (10) gemäß Anspruch 8, umfassend einen zweiten Sicherungsmechanismus (63), der dazu betätigbar ist, mindestens einen des Sensors und des Schalters (40, 50) an der Teleskopverlängerung (61) an einem Drehmechanismus zu befestigen.

11. Kopfanordnungssystem (10) gemäß Anspruch 10, wobei der zweite Sicherungsmechanismus (63) in einer entriegelten Position mindestens eines ermöglicht von:
Drehung des mindestens einen des Sensors und des Schalters (40, 50) um den Drehmechanismus so, dass ein Präsentationswinkel des mindestens einen des Sensors und des Schalters auswählbar ist, und
Entfernen des mindestens einen des Sensors und des Schalters.

12. Kopfanordnungssystem (10) gemäß Anspruch 11, wobei
(i) der zweite Sicherungsmechanismus (63) in einer verriegelten Position das mindestens einen des Sensors und des Schalters (40, 50) an der Teleskopverlängerung (61) in dem gewählten Präsentationswinkel fixiert;
oder
(ii) der Drehmechanismus ein Kugelgelenk ist.

13. Kopfanordnungssystem (10) gemäß Anspruch 8, wobei der mindestens eine Seitenarm (60, 70) einen zweiten Sicherungsmechanismus (64) umfasst, der dazu betätigbar ist, den mindestens einen Seitenarm in einer ausgewählten Drehung in einer vertikalen Ebene zu sichern, wobei der zweite Sicherungsmechanismus in einer unverriegelten Position eine Drehung des mindestens einen Seitenarms in eine ausgewählte Position in der vertikalen Ebene ermöglicht, und wobei der zweite Sicherungsmechanismus in einer verriegelten Position den mindestens einen Seitenarm (60, 70) in der ausgewählten Position in der vertikalen Ebene fest sichert.

14. Kopfanordnungssystem (10) gemäß Anspruch 8, wobei das Kopfanordnungsgehäuse (20) mindestens einen Welle (21) umfasst und der mindestens eine Seitenarm (60, 70) einen zweiten Sicherungsmechanismus (65) umfasst, der betätigt werden kann, um den mindestens einen Seitenarm an dem Kopfanordnungsgehäuse (20) zu befestigen.

15. Kopfanordnungssystem (10) gemäß Anspruch 14, wobei der zweite Sicherungsmechanismus (65) in einer entriegelten Position mindestens eines ermöglicht von:
Drehen des mindestens einen Seitenarms (60, 70) in einer horizontalen Ebene um die mindestens eine Welle (21) so, dass ein Abstand zwischen dem mindestens einen Sensor und dem Schalter (40, 50) und dem Kopf eines Benutzers wählbar ist, und
Entfernen des mindestens einen Seitenarms (60, 70) .

16. Kopfanordnungssystem (10) gemäß Anspruch 15, wobei der zweite Sicherungsmechanismus (65) in einer verriegelten Position den mindestens einen Seitenarm (60, 70) an der mindestens einen Welle (21) des Kopfanordnungsgehäuses (20) in dem ausgewählten Abstand fixiert.

17. Kopfanordnungssystem (10) gemäß Anspruch 1, umfassend:
eine Vielzahl von Sensoren (30) in einem Okzipitalpolster, das am Kopfanordnungsgehäuse (20) angebracht ist, wobei jeder der Vielzahl von Sensoren dazu ausgelegt ist, als Reaktion auf eine Sensoraktivierung ein Aktivierungssignal an den Mikroprozessor zu senden,
wobei der Mikroprozessor dazu ausgelegt ist:
ein Befehlssignal zu erzeugen, wenn der Mikroprozessor das Aktivierungssignal aus allen der Vielzahl von Sensoren (30) im Okzipitalpolster empfängt, und
das Aktivierungssignal zu ignorieren, wenn der Mikroprozessor das Aktivierungssignal aus weniger als allen der Vielzahl von Sensoren (30) im Okzipitalpolster empfängt.

## Revendications

1. Système de têtière (10) pour un fauteuil roulant motorisé, comprenant :
un corps de têtière (20) comprenant des axes (21), dans lequel chacun des axes comprend des sections de réception de bras latéraux ;
au moins un bras latéral (60, 70) couplé de manière amovible à l'une des sections de réception de bras latéraux de l'un des axes (21) ; et
au moins un d'un commutateur et d'un capteur (40, 50) couplé au corps de têtière (20) via l'au moins un bras latéral (60, 70),
dans lequel le corps de têtière (20) comprend un microprocesseur et un mécanisme d'activation/désactivation (23), dans lequel le mécanisme d'activation/désactivation est configuré pour ordonner au microprocesseur de :
générer des signaux de commande en réponse à des signaux d'activation reçus depuis l'au moins un du commutateur et du capteur (40, 50) si le mécanisme d'activation/désactivation (23) est dans mode d'activation sélectionné, et
ne pas tenir compte des signaux d'activation reçus depuis l'au moins un du commutateur et du capteur (40, 50) si le mécanisme d'activation/désactivation (23) est dans un mode désactivation sélectionné.

2. Système de têtière (10) selon la revendication 1, dans lequel l'au moins un bras latéral (60, 70) comprend une pluralité de bras latéraux (60, 70), chacun de la pluralité de bras latéraux couplé de manière amovible à l'une des sections de réception de bras latéraux de l'un des axes (21).

3. Système de têtière (10) selon la revendication 2, dans lequel le système de têtière peut être reconfiguré en enlevant au moins un de la pluralité de bras latéraux (60, 70) de l'une des sections de réception de bras latéraux et en rattachant l'au moins un de la pluralité de bras latéraux (60, 70) enlevé sur une autre des sections de réception de bras latéraux de l'un des axes (21).

4. Système de têtière (10) selon la revendication 1, dans lequel le corps de têtière (20) comprend des prises d'entrée (25), dans lequel les prises d'entrée (25) sont chacune fonctionnelles pour recevoir une prise de câble depuis au moins un du commutateur et du capteur (40, 50).

5. Système de têtière (10) selon la revendication 2, dans lequel le corps de têtière (20) comprend des fixations d'axes (22), dans lequel chacune des fixations d'axes (22) est fixée sur un des axes (21) de telle manière que chacun des axes comprend une partie supérieure et une partie inférieure, et dans lequel chacune de la partie supérieure et de la partie inférieure de chacun des axes peut fonctionner pour recevoir un de la pluralité de bras latéraux (60, 70).

6. Système de têtière (10) selon la revendication 1, dans lequel le corps de têtière (20) comprend
(i) un élément de montage à joint à rotule (27) comprenant un joint à rotule (26) en une partie centrale du corps de têtière (20) permettant le mouvement d'une partie avant du corps de têtière (20) relativement à une partie arrière du corps de têtière (20) ; ou
un mécanisme de libération d'articulation (29) pouvant fonctionner pour libérer l'au moins un bras latéral (60, 70) d'une position originale de telle manière que l'au moins un bras latéral est écarté en tournant du corps de têtière (20), le mécanisme de libération basculant (29) comprenant un index de telle manière que l'au moins un bras latéral s'enclenche dans la position originale quand l'au moins un bras latéral est tourné vers le corps de têtière (20).

7. Système de têtière (10) selon la revendication 1, dans lequel le système de têtière répond à des normes de compatibilité électromagnétique (EMC), d'interférences électromagnétiques (EMI), et de décharge électrostatique (ESD).

8. Système de têtière (10) selon la revendication 1, dans lequel l'au moins un bras latéral (60, 70) comprend :
un tube de bras latéral courbe, creux fixé sur le corps de têtière (20),
une extension télescopique (61) courbe fixée sur l'au moins un du capteur et du commutateur (40, 50), dans lequel l'extension télescopique peut coulisser depuis une position non étendue sélectionnable, où l'extension télescopique est sensiblement logée dans le tube latéral, vers des positions d'extension sélectionnables au moins en partie à l'extérieur du tube de bras latéral, et
un premier mécanisme de fixation (62) pouvant fonctionner pour bloquer l'extension télescopique (61) dans au moins une de la position non étendue sélectionnable et des positions d'extension sélectionnables.

9. Système de têtière (10) selon la revendication 8, dans lequel le premier mécanisme de fixation (62) est une bague de blocage sans outil.

10. Système de têtière (10) selon la revendication 8, comprenant un second mécanisme de fixation (63) pouvant fonctionner pour fixer l'au moins un du capteur et du commutateur (40, 50) sur l'extension télescopique (61) au niveau d'un mécanisme tournant.

11. Système de têtière (10) selon la revendication 10, dans lequel le second mécanisme de fixation (63) dans une position débloquée permet au moins un parmi :
la rotation de l'au moins un du capteur et du commutateur (40, 50) autour du mécanisme de rotation de telle manière qu'un angle de présentation de l'au moins un du capteur et du commutateur est sélectionnable, et
l'enlèvement de l'au moins un du capteur et du commutateur.

12. Système de têtière (10) selon la revendication 11, dans lequel
(i) le second mécanisme de fixation (63) dans une position bloquée fixe de manière fixe l'au moins un du capteur et du commutateur (40, 50) sur l'extension télescopique (61) à l'angle de présentation sélectionné ;
ou
(ii) de rotation est un joint à rotule.

13. Système de têtière (10) selon la revendication 8, dans lequel l'au moins un bras latéral (60, 70) comprend un second mécanisme de fixation (64) pouvant fonctionner pour fixer l'au moins un bras latéral avec une rotation sélectionnée dans un plan vertical, dans lequel le second mécanisme de fixation dans une position débloquée permet la rotation de l'au moins un bras latéral vers une position sélectionnée dans le plan vertical, et dans lequel le second mécanisme de fixation dans une position bloquée fixe de manière fixe l'au moins un bras latéral (60, 70) dans la position sélectionnée dans le plan vertical.

14. Système de têtière (10) selon la revendication 8, dans lequel le corps de têtière (20) comprend au moins un axe (21) et l'au moins un bras latéral (60, 70) comprend un second mécanisme de fixation (65) pouvant fonctionner pour fixer l'au moins un bras latéral sur le corps de têtière (20).

15. Système de têtière (10) selon la revendication 14, dans lequel le second mécanisme de fixation (65) dans une position débloquée permet au moins un parmi :
la rotation de l'au moins un bras latéral (60, 70) dans un plan horizontal tour de l'au moins un axe (21) de telle manière qu'une distance entre l'au moins un du capteur et du commutateur (40, 50) et une tête d'utilisateur peut être sélectionnée, et
l'enlèvement de l'au moins un bras latéral (60, 70).

16. Système de têtière (10) selon la revendication 15, dans lequel le second mécanisme de fixation (65) dans une position bloquée fixe de manière fixe l'au moins un bras latéral (60, 70) sur l'au moins un axe (21) du corps de têtière (20) à la distance sélectionnée.

17. Système de têtière (10) selon la revendication 1, comprenant :
une pluralité de capteurs (30) dans un coussin occipital fixé sur le corps de têtière (20), chacun de la pluralité de capteurs configuré pour transmettre un signal d'activation au microprocesseur en réponse à l'activation du capteur,
dans lequel le microprocesseur est configuré pour :
générer un signal de commande si le microprocesseur reçoit le signal d'activation depuis toute la pluralité de capteurs (30) dans le coussin occipital, et
d'ignorer le signal d'activation si le microprocesseur reçoit le signal d'activation depuis moins que toute la pluralité de capteurs (30) dans le coussin occipital.
